# EUROPEAN PATENT APPLICATION

(11) **EP 2 869 154 A1**
(43) Date of publication of application: **06.05.2015**
(21) Application number: 14191264.2
(22) Date of filing: 31.10.2014
(51) Int. Cl.: G05B 23/02, G05B 19/042, G05B 19/05

(54) **Independent operation of control hardware and a monitoring system in an automation controller**

(30) Priority: 31.10.2013 US 201314068229
(71) Applicant: Rockwell Automation Technologies, Inc., Mayfield Heights, OH 44124 (US)
(72) Inventor: Killian, Daniel E., Eastlake, OH 44095 (US)
(74) Representative: Grünecker Patent- und Rechtsanwälte PartG mbB

(57) **Abstract**

The subject matter disclosed herein describes an improved system for self-monitoring of an industrial controller. Two processors are provided on a control board for the industrial controller. One of the processors is designated the control processor and executes the control program for the industrial control system. The other processor is designated the monitoring processor and verifies proper operation of the controller. The monitoring processor verifies proper operation of the industrial controller and is in communication with the control processor. The control processor periodically verifies that the monitoring processor is operational. If the monitoring processor ceases operation, the control processor generates a warning message and provides for a delayed shutdown of the industrial controller. The control processor may copy the current state of the industrial controller to memory. After a technician has corrected the problem with the monitoring processor, the control processor may restore the stored state of the industrial controller.

## Description

### BACKGROUND OF THE INVENTION

The subject matter disclosed herein relates generally to a monitoring system for an industrial controller and, more specifically, to a system that monitors the processor of the industrial controller and that executes independently of the processor.

Industrial controllers, such as programmable logic controllers (PLC's), are specialized electronic computer systems used for the control of industrial processes or machines, for example, in a factory environment. Industrial controllers differ from conventional computers in a number of ways. Physically, they are constructed to be substantially more robust against shock and damage and to better resist external contaminants and extreme environmental conditions. The processors and operating systems are optimized for real-time control and execute languages allowing ready customization of programs to comport with a variety of different controller applications. Industrial controllers may have a user interface for accessing, configuring, and/or programming the industrial controller, such as through a locally connected terminal having a keyboard, mouse and display.

Typically, industrial controllers have a highly modular architecture that allows different numbers and types of modules or adapters to be used to connect the controllers to the physical devices used to monitor and/or control the industrial process or machine. Network cards or adapters establish special "control networks" suitable for highly reliable and available real-time communication. Such control networks commonly used in industrial control systems include, for example, ControlNet, DeviceNet, or EtherNet/IP. Control networks differ from standard communication networks, such as Ethernet, by guaranteeing maximum communication delays. This may be obtained, for example, by pre-scheduling the bandwidth of the network and/or providing redundant communication capabilities for high-availability. Control networks also differ from one another in physical aspects, for example, the type of media (e.g., co-axial cable, twisted pair, or light fiber), the protocols of its operation (e.g., Baud rate, number of channels, word transmission size, or use of connected messaging), how the data is formatted, and how it is collected into standard messages.

As part of their enhanced modularity, industrial controllers may employ I/O modules dedicated to a particular type of electrical signal and function, for example, detecting AC or DC input signals or controlling AC or DC output signals. Each of these I/O modules may have a connector system allowing them to be installed in different combinations in a housing or rack along with other selected I/O modules to match the demands of the particular application. Multiple or individual I/O modules may be located at convenient control points near the controlled process or machine to communicate with a central industrial controller via the special control network.

As the industrial processes and machines have grown more complex, the industrial controllers and the associated industrial control systems have grown more complex. There is a corresponding increase in the number of components that may cause the system to fail. As a result, programmers have designed systems to detect the presence of a failure. For example, redundant inputs and outputs may be wired between a device on the controlled machine or process and an I/O module. The processor may monitor the state of each input or output to make sure that each is working properly. Similarly, it is known to periodically force a transition in state on individual inputs or outputs to ensure that the inputs and outputs are still able to change state.

Just as the number of components in the industrial control systems has increased, the number of components in the industrial controller has similarly increased. The industrial controller includes a control board which may include, for example, a microprocessor, analog-to-digital (A/D) converters, and buffers and interfaces for communication via numerous ports including, but not limited to, an industrial network, a universal serial bus (USB), a fiber optic connection, a universal asynchronous receiver/transmitter (UART), and a backplane. The control board also includes numerous busses for data, addresses, and power between various devices and power supplies at varying control voltages for each of the above. The increasing number of components in the industrial controller makes it more susceptible to failure.

Detecting a failure in the industrial controller provides a unique challenge. The program executing in a control processor controls operation of the industrial control system. If one of the components fails, the control processor may enter a condition in which the program ceases to operate normally and may end up in an unknown or unintended state. If the control processor is in an unknown or unintended state, the industrial control system may similarly end up operating in an unknown or unintended state, and damage to the control system may result. Thus, the industrial controller is typically configured to perform a hard, or immediate, shut down of the control system if the industrial controller detects a fault condition.

Historically, it has been known to use the control processor to monitor conditions in the industrial controller in addition to controlling the industrial control system. The control processor may execute routines which attempt to detect systemic problems with the industrial controller prior to a failure of the industrial controller. However, the additional monitoring routines add complexity to the control processor and may cause failure as well. If the monitoring routines fail, the industrial controller enters a fault condition, generating a hard shut down of the industrial control system.

Forcing a hard shutdown of the industrial control system has various disadvantages. Industrial controllers maintain a table containing the present state of the industrial control system. If a hard shutdown occurs, the control system stops operating which, in turn, may cause many of the states in the table to change. Once a technician has repaired the controller, there is no knowledge of the state of the industrial control system prior to shutting down. The industrial control system may need to be cleared, for example, by removing product from a process line or by moving stations to a known position prior to restarting operation of the control system. The clearing process results in additional time and expense in the repair process.

Thus, it would be desirable to provide an improved monitoring system for an industrial controller.

### BRIEF DESCRIPTION OF THE INVENTION

The subject matter disclosed herein describes an improved system for self-monitoring of an industrial controller. Two processors are provided on a control board for the industrial controller. One of the processors is designated the control processor and executes the control program for the industrial control system. The other processor is designated the monitoring processor and verifies proper operation of the controller. The monitoring processor receives as inputs each of the control voltages and clock frequencies present on the industrial controller. The monitoring processor verifies that each of the voltages is at the proper level and that the clock is at the proper frequency. If the monitoring processor detects a fault, it shuts down operation of the industrial controller. The monitoring processor is also in communication with the control processor. The control processor periodically verifies that the monitoring processor is operational. If the monitoring processor ceases operation, the control processor generates a warning message and provides for a delayed shutdown of the industrial controller. By allowing the industrial controller to shut down at a later time rather than execute an immediate shut down, the control processor may copy the current state of the controlled machine or process to memory and provide for a less disruptive shut down of the controlled machine or process. After a technician has corrected the problem with the monitoring processor, the control processor may restore the stored state of the controlled machine or process providing for a quicker recovery from the fault condition.

According to one embodiment of the invention, an industrial controller is configured to control a plurality of devices defining, at least in part, an industrial machine or process. The industrial controller includes a control board, a first processor, a second processor executing independently of the first processor, and a handshaking signal periodically transmitted between the first processor and the second processor. The first processor is operatively connected to the control board and configured to receive a plurality of first input signals. Each of the first input signals corresponds to a current state of one of the plurality of devices. The first processor also executes a stored program to generate a plurality of output signals as a function of the plurality of first input signals. Each output signal controls operation, at least in part, of one of the plurality of devices. The second processor is operatively connected to the control board and configured to receive a plurality of second input signals. Each of the second input signals corresponds to a hardware function of the control board. The second processor monitors the plurality of second input signals and generates a first fault when it detects an error in the hardware function of the control board. The first fault initiates a hard shut down of the first processor. The first processor monitors the handshaking signal and generates a second fault when it detects an error in the handshaking signal. The second fault allows the first processor to continue executing for up to a predetermined time prior to shutting down the first processor.

According to another embodiment of the invention, a method of self-monitoring operation of an industrial controller configured to control a plurality of devices defining, at least in part, an industrial machine or process is disclosed. The method includes the steps of receiving a plurality of first input signals at a first processor operatively connected to a control board and executing a stored program to generate a plurality of output signals as a function of the plurality of first input signals. Each of the first input signals corresponds to a current state of one of the plurality of devices. Each output signal controls operation, at least in part, of one of the plurality of devices. A plurality of second input signals is received at a second processor operatively connected to the control board. Each second input signal corresponds to a hardware function of the control board, and the second processor executes independently of the first processor. A handshaking signal is transmitted between the first processor and the second processor at a periodic interval, and the handshaking signal is monitored with the first processor. A fault is generated with the first processor when it detects an error in the handshaking signal. When the fault is generated, execution of the first processor is continued for up to a predetermined time prior to shutting down the first processor.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a is an exemplary industrial control system incorporating an industrial controller according to one embodiment of the invention;
FIG. 2 is a partial block diagram representation of the industrial control system of Fig. 1; and
FIG. 3 is a partial schematic diagram of a control board in the industrial controller of Fig. 1.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION OF THE PREFERRED EMBODIMENTS

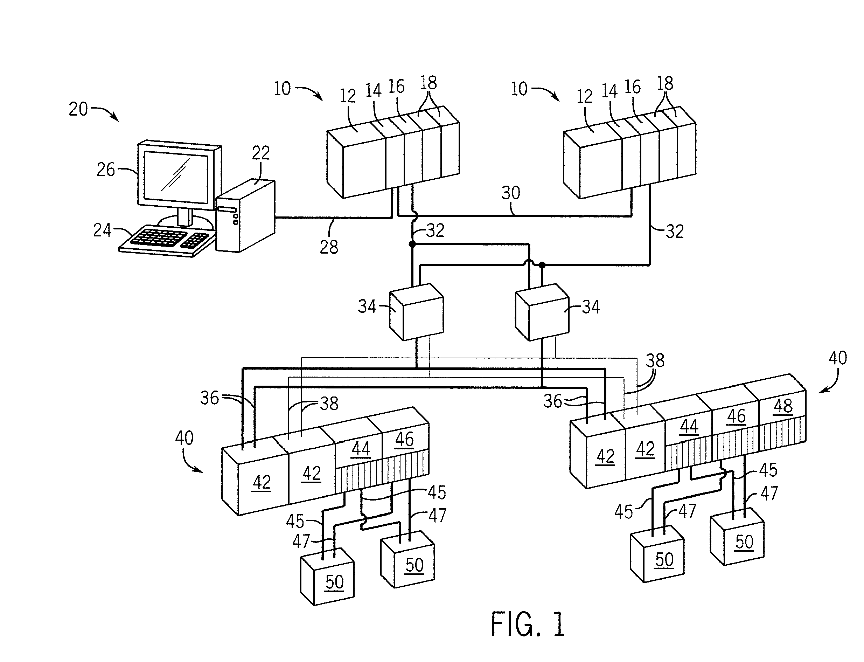

Turning initially to Fig. 1, an exemplary industrial control system includes a pair of industrial controllers 10. As illustrated, the industrial controller 10 is modular and may be made up of numerous different modules connected together in a rack or mounted to a rail. Additional modules may be added or existing modules removed and the industrial controller 10 reconfigured to accommodate the new configuration. Optionally, the industrial controller 10 may have a predetermined and fixed configuration. Each of the illustrated industrial controllers 10 includes a power supply module 12, processor module 14, and network module 16. Each industrial controller 10 is further shown with two additional modules 18 that may be selected according to the application requirements and may be, for example, analog or digital input or output modules.

One or more operator interfaces 20 may be connected to the industrial control network. Each operator interface 20 may include a processing device 22, input device 24, including, but not limited to, a keyboard, touchpad, mouse, trackball, or touch screen, and a display device 26. It is contemplated that each component of the operator interface may be incorporated into a single unit, such as an industrial computer, laptop, or tablet computer. It is further contemplated that multiple display devices 26 and/or multiple input devices 24 may be distributed about the controlled machine or process and connected to one or more processing devices 22. The operator interface 20 may be used to display operating parameters and/or conditions of the controlled machine or process, receive commands from the operator, or change and/or load a control program or configuration parameters. An interface cable 28 connects the operator interface 20 to one of the industrial controllers 10.

The industrial controllers 10 are connected to other devices by one or more networks according to the application requirements. As illustrated, an interface cable 30 directly connects each of the processor modules 14. A redundant network topology is established by connecting the network interface module 16 of both industrial controllers 10 to each of a pair of switches 34 by a network cable 32. Each switch 34 is connected to one of a pair of remote racks 40 by a suitable network cable 36, 38. It is contemplated that the interface cable 30 or any of the network cables 32, 36, 38 may be a custom cable configured to communicate via a proprietary interface or may be any standard industrial network, including, but not limited to, Ethernet/IP, DeviceNet, or ControlNet. Each network module 16 and switch 34 is configured to communicate according to the protocol of the network to which it is connected and may be further configured to translate messages between two different network protocols.

Each remote rack 40 may be positioned at varying positions about the controlled machine or process. As illustrated, each remote rack 40 is modular and may be made up of numerous different modules connected together in a rack or mounted to a rail. Additional modules may be added or existing modules removed and the remote rack 40 reconfigured to accommodate the new configuration. Optionally, the remote rack 40 may have a predetermined and fixed configuration. As illustrated, each remote rack 40 includes a pair of network modules 42, each network module 42 connected to one of the redundant networks, an input module 44, and an output module 46. Each of the input modules 44 is configured to receive input signals 45 from controlled devices 50, and each of the output modules 46 is configured to provide output signals 47 to the controlled devices 50. Optionally, still other modules 48 may be included in the remote rack 40. It is understood that the industrial control network, industrial controller 10, and remote racks 40 may take numerous other forms and configurations without deviating from the scope of the invention.

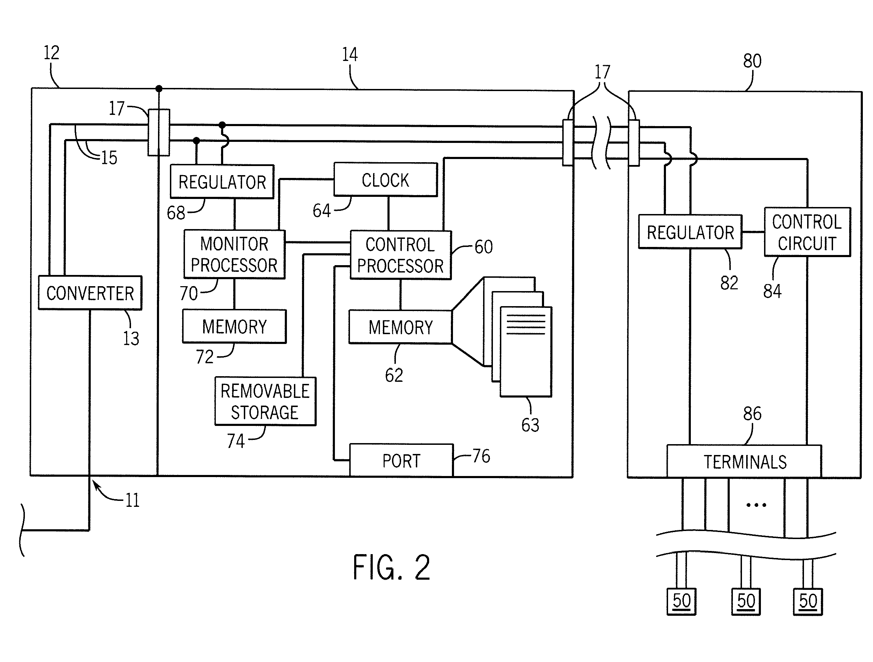

Turning next to Fig. 2, the power supply module 12 is configured to receive an input voltage and convert it to one or more control voltages. The input voltage is connected to one or more terminals 11 on the power supply module 12. According to one embodiment of the invention, the terminals 11 are configured to receive a 110 VAC input voltage. Optionally, the terminals 11 may be configured to receive other alternating current (AC) or direct current (DC) input voltages including, but not limited to, 200 VAC, 230VAC, 24 VDC, or 48 VDC. The terminals 11 are connected internally to a converter 13. The converter 13 transforms the input voltage to one or more different voltage levels. The converter 13 may, for example, convert an AC input to a DC output or a DC input at a first voltage potential to a DC voltage at a second voltage potential. The output voltages 15 are preferably control voltages for use within the control system. The output voltages 15 may be, for example, 24 VDC or 5 VDC, and may be supplied to other modules in the control system via a backplane connection 17 or via output terminals (not shown) and external conductors. Optionally, the converter 13 may regulate the input voltage, for example, a 24 VDC input to maintain a constant control voltage for the control system.

The processor module 14 is configured to control operation of the control system and to self-monitor operation of the processor module 14. The processor module 14 includes a first processor 60, a first memory device 62, a second processor 70, and a second memory device 72. Each of the processors 60, 70 are configured to execute a program and to access or store operating data and/or configuration parameters stored in the corresponding memory device 62, 72. According to another embodiment of the invention, a single memory device is provided and both the first processor 60 and the second processor 70 are in communication with the memory device. The processors 60, 70 may be any suitable processor according to the module requirements. It is contemplated that processors 60, 70 may include a single processing device or multiple processing devices executing in parallel and may be implemented in separate electronic devices or incorporated on a single electronic device, such as a field programmable gate array (FPGA) or application specific integrated circuit (ASIC). It is further contemplated that the monitor processor 70 may be implemented via a logic circuit including multiple discrete components such as digital logic gates and/or comparator circuits. Similarly, the memory devices 62, 72 may be a single device, multiple devices or may be incorporated in part or in whole within the FPGA or ASIC. According to the illustrated embodiment, the processor module 14 also includes a removable storage device 74. The removable storage device 74 may be a non-volatile memory card, such as a Secure Digital (SD) card. The processor module 14 also includes a clock circuit 64 configured to generate one or more clock signals at one or more frequencies. The clock signals are used to operate each of the processors 60, 70. Communication between modules mounted in the same rack or contained within a single housing occurs via a backplane and a corresponding backplane connector 17. Communication between modules mounted in different racks or at remote locations from each other occur via a port 76, such as a network interface, and suitable a communication medium connecting the modules.

The processor module 14 receives power from the power supply module 12 via the backplane connection 17. One or more control voltages such as 24 VDC or 5 VDC may be supplied. The control voltage is provided as an input to a regulator circuit 68 in the processor module 14. The regulator circuit 68 is configured to output a regulated control voltage to the electronic components within the processor module either at the input control voltage or at one or more different voltage potentials. It is known the various electronic devices may require different control voltages for operation, including, but not limited to, 1.0 VDC, 1.5 VDC, 3.3 VDC, or 5 VDC. The regulator circuit 68 performs the required voltage conversions to supply a constant voltage at the appropriate voltage potential to each of the electronic components in the processor module 14. Each of the voltage potentials is additionally provided as an input to the second processor 70 for monitoring. It is contemplated that each of the components in the processor module 14 may be mounted to a single control board enclosed within a housing of the processor module 14. Optionally, two or more control boards may be enclosed within the housing and the components may be divided between control boards with suitable communication interfaces between control boards.

According to the embodiment of the control system illustrated in Fig. 2, an exemplary additional module 80 is shown connected to the processor module 14. It is contemplated that the additional module may be one of the additional modules 18 mounted in the control rack and communicating via backplane connectors 17. Optionally, the exemplary additional module 80 may be an input module 44, an output module 46, or an additional module 48 in a remote rack 40, connected via suitable network media and/or communication cables. The additional module 80 includes a regulator circuit 82 receiving one or more control voltages such as 24 VDC or 5 VDC. The control voltage is provided as an input to a regulator circuit 68 in the processor module 14. The regulator circuit 68 is configured to output a regulated control voltage to the electronic components within the processor module either at the input control voltage or at one or more different voltage potentials. The regulator circuit 82 performs the required voltage conversions to supply a constant voltage at the appropriate voltage potential to each of the electronic components in the additional module 80. The additional module 80 also includes a control circuit 84 which includes any electronic devices and associated connections to process and transfer input and/or output signals between terminals 86 and the processor module 14. The terminals 86 are configured to connect the module 80 to the controlled devices 50.

In operation, the processor module 14 is configured to maintain one or more tables corresponding to the present state of the controlled machine or process. Each table may be a single database or multiple databases stored in the memory device 62. The table includes values corresponding to the present state of operation of the machine. The types of values stored may vary according to the type of information being stored. For example, a digital input/output may include a binary value (i.e., a 0 or 1) while an analog input/output may include a value corresponding to a voltage potential (e.g., 0-5 V) or to a number of counts (e.g., 0-255) corresponding to a digital representation of the voltage potential. Similarly, internal variables may include various values corresponding to counters, timers, and the like executing within the control program. The database may be sorted, for example, according to the type of signal for which a value is being stored, such as an I/O table, a timer table, a counter table, and the like.

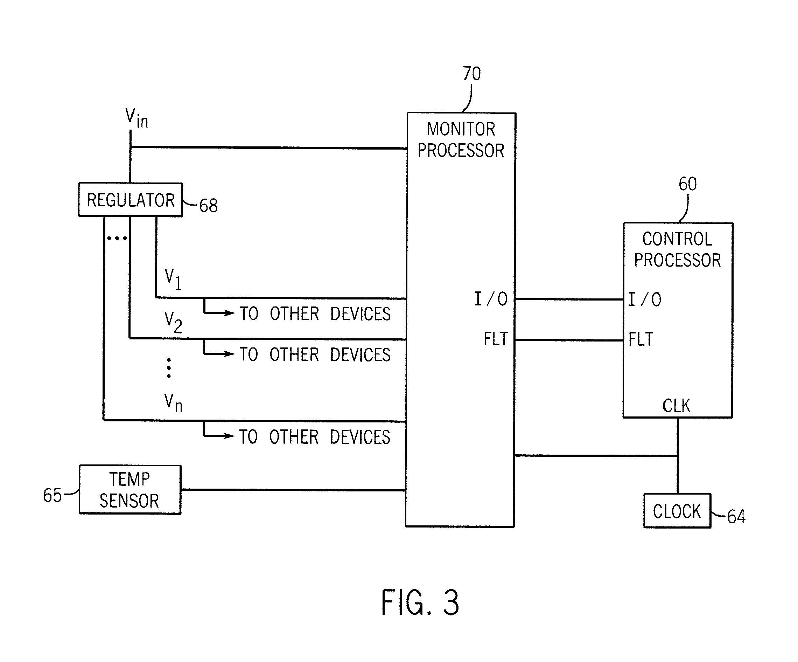

The processor module 14 is configured to perform self-monitoring to verify that the module itself is operating correctly. With reference also to Fig. 3, the monitor processor 70 receives each of the control voltages (V₁-Vₙ) from the regulator circuit 68 as input signals. According to one embodiment of the invention, each of the inputs is an analog input which converts the control voltage to a digital value representing the magnitude of voltage present at the input. The digital value is compared to a reference value to determine whether the regulator circuit 68 is generating the correct control voltages (V₁-Vₙ). Optionally, the control board may include a multiplexer circuit and each of the control voltages may be sequentially supplied to a single analog input and read into the monitor processor 70. It is contemplated that still other configurations of external circuitry and inputs may be provided to provide an indication of each voltage level to the monitor processor 70 without deviating from the scope of the invention. Still other inputs may be provided to the monitor processor 70. For example, one or more clock signals output from the clock circuit 64 may be provided as inputs. Optionally, the control board may include a temperature sensor 65, which provides an input to the monitor processor 70, to detect an over temperature condition in the processor module 14. The monitor processor 70 verifies that the frequency of each clock signal is correct and that the temperature within the processor module 14 is below a maximum permitted temperature. Still other signals corresponding to the operation of the processor module 14 may be provided as inputs to the monitor processor 70 without deviating from the scope of the invention.

The monitor processor 70 continuously monitors the input signals to verify proper operation of the processor module 14. The monitor processor 70 executes a program, which may be stored in the memory device 72 or in memory integrated with the processor 70, to periodically evaluate each of the input signals. If one of the input signals indicates there is an error in the operation of the processor module 14, the monitor processor 70 generates a fault condition and initiates a hard shut down of the processor module 14. Implementation of the hard shut down may vary according to application requirements but, in general, requires that the control processor 60 ceases execution of the control program and causes the controlled machine or process to come to an immediate stop, for example, via removal of power and setting of brakes on motors/actuators or via an immediate controlled deceleration of motors/actuators to a stopped condition. As illustrated in Fig. 3, a dedicated fault output, FLT, from the monitor processor 70 may be connected to an interrupt on the control processor 60 which initiates an interrupt shutdown routine. Optionally, the input may be a standard input which is periodically read by the control processor 60. It is further contemplated that a pair of dedicated fault outputs, FLT, may be connected from the monitor processor 70 to the control processor 60, where the control processor 60 compares the state of the two fault signals prior to initiating a shutdown routine such that a spurious signal or failed output on one of the two fault outputs does not inadvertently cause the control processor 60 to shut down. Detection of a failure on one of the two fault outputs may initiate a controlled shut down as discussed in more detail below. Still other configurations of communicating the fault condition from the monitor processor 70 to the control processor 60 may be implemented without deviating from the scope of the invention. The hard shut down, however, does not typically provide the control processor 60 the opportunity to capture the current state of the controlled machine or process which may facilitate restarting the controlled machine or process after the fault condition has been corrected.

According to another aspect of the invention, the monitor processor 70 may distinguish certain hardware faults that require a hard shut down and other hardware faults that permit a controlled shut down. For example, the monitor processor 70 may detect that the level of one of the control voltages (V₁-Vₙ) provided as an input is incorrect. This may be indicative, for example, that one of the devices in the regulator circuit 68 for that control voltage has failed. The monitor processor 70 may also have knowledge of which electronic devices and/or circuits on the circuit board utilize the particular control voltage (V₁-Vₙ) and whether the electronic devices and/or circuits are critical to the operation of the controlled machine or process. If only electronic devices and/or circuits that are not critical to operation utilize a particular control voltage, the monitor processor 70 may generate a fault, but also indicate to the control processor 60 that a controlled shutdown, rather than a hard shut down, may occur. The controlled shutdown may provide the control processor 60 the opportunity to capture the current state of the controlled machine or process prior to bringing the controlled machine or process to a stopped condition.

Addition of the monitor processor 70 provides an additional potential failure condition, namely that the monitor processor 70 and/or it's associated peripheral hardware ceases to operate properly. The control processor 60, therefore, is used to monitor operation of the monitor processor 70. According to the illustrated embodiment, the monitor processor 70 and the control processor 60 have inputs and/or outputs, I/O, connected between each other. The I/O may be dedicated signals or a communication channel configured to transfer messages or data packets between the two processors. One of the signals passed between the monitor processor 70 and the control processor 60 is a handshaking signal. At a periodic interval, either the monitor processor 70 or the control processor 60 generates a handshaking signal that is transmitted to the other processor. The other processor generates a response signal which is transmitted back to the originating processor. The control processor 60 monitors this handshaking signal to verify that the monitor processor 70 is continuing to operate. If the monitor processor 70 is the originating processor, the control processor 60 expects the handshaking signal to be generated at the periodic interval. Similarly, if the control processor 60 is the originating processor, the control processor 60 expects the response signal to be generated within a predefined interval of transmitting the handshaking signal. If the control processor 60 fails to receive either the handshaking signal or the response signal from the monitor processor 70 within the expected duration, it generates a fault condition, indicating that the monitor processor 70 has stopped operating properly.

After the control processor 60 generates the fault condition indicating that the monitor processor 70 has stopped operating properly, it may continue operating for a period of time. According to one embodiment of the invention, the period of time may be up to eight hours. During this period of time, the control processor 60 is permitted to continue controlling the machine or process, and an operator may determine an appropriate time at which to cease operation of the controlled machine or process. For example, a process line may be allowed to finish handling the parts already started or a machining operation may be allowed to finish the current operation or a sequence of operations. The control system may, therefore, be in a more suitable state to cease operation.

According to another aspect of the invention, the controlled shut down may allow the monitor processor 70 to recover from the faulted condition without requiring any stoppage of the controlled machine or process. If, for example, the monitor processor 70 suffers a "soft fault" in which a portion of the memory 72 accessed by the monitor processor 70 either for data or for program instructions becomes corrupted, the monitor processor 70 may be configured to reset the memory 72. The corrupted memory 72 may be volatile while a non-volatile portion of memory 72 stores a record of data and/or instructions which may be restored to the volatile potion of memory 72 during a reset. Upon completion of the reset, the monitor processor 70 may resume normal operation. If the reset is successful and occurs during the predetermined delay for shutting down the control processor 60, the initial fault condition no longer exists and there is no need to shut down the control processor 60.

Further, the control processor 60 may copy all, or a portion of, the tables corresponding to the present state of the controlled machine or process from the memory device 62 to a second memory such as the removable storage device 74. The control processor 60 may be configured to copy the tables when the fault is generated, when the controlled machine or process has reached a desired state or has come to a stop, or a combination thereof. It is contemplated that various other data, such as the control program, stored in the memory device 62 may be copied to the removable storage device 74. The copy may be automatically executed or manually initiated by an operator. Because the control processor 60 has detected a fault in the monitoring processor 70, the most likely method of correcting the fault will be to replace the processor module 14 or a portion thereof. Thus, the removable storage device 74 is removed from the faulted processor module 14 and inserted into the replacement processor module 14. All of the copied data, which may include the desired state of the controlled machine or process and/or the control program, is available in the replacement processor module 14. A technician may copy the data from the removable storage device 74 back to the memory device 62 to facilitate restarting the controlled machine or process.

According to another embodiment of the invention, the second memory may be located remote from the control processor 60. The second memory may be a storage device connected to a computer or other processing device, including but not limited to, a hard drive, CD-ROM, DVD-ROM, USB drive, or SD card. The computer or processing device may be, for example, a central server or a dedicated device, such as a tablet, notebook, laptop, or desktop computer. The computer or processing device is connected to the control processor 60 via a network, which may be wired, wireless, or a combination thereof. The network may consist of a single network protocol or of multiple network protocols with appropriate conversions occurring therebetween.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

### The following is a list of further preferred embodiments of the invention:

1. An industrial controller configured to control a plurality of devices defining, at least in part, an industrial machine or process, the industrial controller comprising:
   a control board;
   a first processor operatively connected to the control board and configured to receive a plurality of first input signals, each first input signal corresponding to a current state of one of the plurality of devices, and to execute a stored program to generate a plurality of output signals as a function of the plurality of first input signals, each output signal controlling operation, at least in part, of one of the plurality of devices;
   a second processor executing independently of the first processor, the second processor operatively connected to the control board and configured to receive a plurality of second input signals, each second input signal corresponding to a hardware function of the control board; and
   a handshaking signal periodically transmitted between the first processor and the second processor, wherein:
      the second processor monitors the plurality of second input signals and generates a first fault when it detects an error in the hardware function of the control board, the first fault initiating a hard shut down of the first processor, and
      the first processor monitors the handshaking signal and generates a second fault when it detects an error in the handshaking signal, the second fault allowing the first processor to continue executing for up to a predetermined time prior to shutting down the first processor.
2. The industrial controller of embodiment 1 further comprising:
   a first memory configured to store a dynamic state table, wherein the dynamic state table includes a plurality of values, each of the values corresponding to a state of the current operation of the industrial machine or process and wherein each of the plurality of values in the dynamic state table is updated when the state changes; and
   a second memory configured to store a copy of the dynamic state table, wherein the first processor copies the plurality of values from the dynamic state table to the copy during the predetermined time after the second fault is generated.
3. The industrial controller of embodiment 2 wherein the second memory is a portable storage medium removably connected to the control board.
4. The industrial controller of embodiment 3 wherein the second memory is a non-volatile memory card.
5. The industrial controller of embodiment 2 further comprising a communication interface operatively connected between the first processor and a network, wherein the second memory is remote from the industrial controller and the first processor copies the plurality of values to the second memory via the communication interface and the network.
6. The industrial controller of embodiment 1 wherein the plurality of second input signals to the second processor are selected from one of a control voltage and a clock frequency.
7. An industrial controller configured to control a plurality of devices defining, at least in part, an industrial machine or process, the industrial controller comprising:
   a control board;
   a processor operatively connected to the control board and configured to receive a plurality of first input signals, each first input signal corresponding to a current state of one of the plurality of devices, and to execute a stored program to generate a plurality of output signals as a function of the plurality of first input signals, each output signal controlling operation, at least in part, of one of the plurality of devices;
   a logic circuit executing independently of the processor, the logic circuit operatively connected to the control board and configured to receive a plurality of second input signals, each second input signal corresponding to a hardware function of the control board; and
   a handshaking signal periodically transmitted between the processor and the logic circuit, wherein:
      the logic circuit monitors the plurality of second input signals and generates a first fault when it detects an error in the hardware function of the control board, the first fault initiating a hard shut down of the processor, and
      the processor monitors the handshaking signal and generates a second fault when it detects an error in the handshaking signal, the second fault allowing the processor to continue executing for up to a predetermined time prior to shutting down the processor.
8. The industrial controller of embodiment 7 further comprising:
   a first memory configured to store a dynamic state table, wherein the dynamic state table includes a plurality of values, each of the values corresponding to a state of the current operation of the industrial machine or process and wherein each of the plurality of values in the dynamic state table is updated when the state changes; and
   a second memory configured to store a copy of the dynamic state table, wherein the processor copies the plurality of values from the dynamic state table to the copy during the predetermined time after the second fault is generated.
9. The industrial controller of embodiment 8 wherein the second memory is a portable storage medium removably connected to the control board.
10. The industrial controller of embodiment 9 wherein the second memory is a non-volatile memory card.
11. The industrial controller of embodiment 8 further comprising a communication interface operatively connected between the processor and a network, wherein the second memory is remote from the industrial controller and the processor copies the plurality of values to the second memory via the communication interface and the network.
12. The industrial controller of embodiment 7 wherein the plurality of second input signals to the logic circuit are selected from one of a control voltage and a clock frequency.
13. A method of self-monitoring operation of an industrial controller configured to control a plurality of devices defining, at least in part, an industrial machine or process, the method comprising the steps of:
   receiving a plurality of first input signals at a first processor operatively connected to a control board, each first input signal corresponding to a current state of one of the plurality of devices;
   executing a stored program to generate a plurality of output signals as a function of the plurality of first input signals, each output signal controlling operation, at least in part, of one of the plurality of devices;
   receiving a plurality of second input signals at a second processor operatively connected to the control board, each second input signal corresponding to a hardware function of the control board, wherein the second processor executes independently of the first processor;
   transmitting a handshaking signal between the first processor and the second processor at a periodic interval;
   monitoring the handshaking signal with the first processor;
   generating a fault with the first processor when it detects an error in the handshaking signal; and
   continuing execution of the first processor for up to a predetermined time when the fault is generated prior to shutting down the first processor.
14. The method of embodiment 13 further comprising the steps of:
   storing a dynamic state table in a first memory during operation of the industrial controller, wherein the dynamic state table includes a plurality of values, each of the values corresponding to a state of the current operation of the industrial machine or process and wherein each of the plurality of values in the dynamic state table is updated when the state changes; and
   storing a copy of the dynamic state table in a second memory with the first processor during the predetermined time after the fault is generated.
15. The method of embodiment 14 wherein the second memory is a portable storage medium removably connected to the control board.
16. The method of embodiment 15 wherein the second memory is a non-volatile memory card.
17. The method of embodiment 14 wherein the second memory is remote from the industrial controller and the step of storing a copy of the dynamic state table includes transmitting the plurality of values to the second memory via a communication interface operatively connected to the first processor and via a network operatively connected between the communication interface and the second memory.
18. The method of embodiment 13 further comprising the steps of:
   monitoring the plurality of second input signals at the second processor;
   generating a second fault with the second processor when it detects an error in the hardware function of the control board; and
   initiating a hard shut down of the first processor responsive to generating the second fault.

**Parts List**

| Part No. | Description |
|---|---|
| 10 | Industrial controller |
| 11 | Terminal |
| 12 | Power supply module |
| 13 | Converter |
| 14 | Processor module |
| 15 | Output voltage |
| 16 | Network module |
| 17 | Backplane connector |
| 18 | Additional module |
| 20 | Operator interface |
| 22 | Processing device |
| 24 | Input device |
| 26 | Display device |
| 28 | Interface cable |
| 30 | Interface cable |
| 32 | Cable |
| 34 | Switch |
| 36 | Network cable |
| 38 | Network cable |
| 40 | Remote rack |
| 42 | Network module |
| 44 | Input module |
| 46 | Output module |
| 47 | Output signal |
| 48 | Additional module |
| 50 | Controlled device |
| 60 | Control processor |
| 62 | First memory device |
| 64 | Clock circuit |
| 65 | Temperature sensor |
| 68 | Regulator circuit |
| 70 | Monitor processor |
| 72 | Second memory device |
| 74 | Removable storage device |
| 76 | Port |
| 80 | Additional module |
| 82 | Regulator circuit |
| 84 | Control circuit |
| 86 | Terminal |

## Claims

1. An industrial controller configured to control a plurality of devices defining, at least in part, an industrial machine or process, the industrial controller comprising:
a control board;
a processor operatively connected to the control board and configured to receive a plurality of first input signals, each first input signal corresponding to a current state of one of the plurality of devices, and to execute a stored program to generate a plurality of output signals as a function of the plurality of first input signals, each output signal controlling operation, at least in part, of one of the plurality of devices;
a logic circuit executing independently of the processor, the logic circuit operatively connected to the control board and configured to receive a plurality of second input signals, each second input signal corresponding to a hardware function of the control board; and
a handshaking signal periodically transmitted between the processor and the logic circuit, wherein:
the logic circuit monitors the plurality of second input signals and generates a first fault when it detects an error in the hardware function of the control board, the first fault initiating a hard shut down of the processor, and
the processor monitors the handshaking signal and generates a second fault when it detects an error in the handshaking signal, the second fault allowing the processor to continue executing for up to a predetermined time prior to shutting down the processor.

2. The industrial controller of claim 1 further comprising:
a first memory configured to store a dynamic state table, wherein the dynamic state table includes a plurality of values, each of the values corresponding to a state of the current operation of the industrial machine or process and wherein each of the plurality of values in the dynamic state table is updated when the state changes; and
a second memory configured to store a copy of the dynamic state table, wherein the processor copies the plurality of values from the dynamic state table to the copy during the predetermined time after the second fault is generated.

3. The industrial controller of claim 2 wherein the second memory is a portable storage medium removably connected to the control board.

4. The industrial controller of claim 2 further comprising a communication interface operatively connected between the processor and a network, wherein the second memory is remote from the industrial controller and the processor copies the plurality of values to the second memory via the communication interface and the network.

5. The industrial controller of any one of claims 1 to 4 wherein the plurality of second input signals to the logic circuit are selected from one of a control voltage and a clock frequency.

6. A method of self-monitoring operation of an industrial controller configured to control a plurality of devices defining, at least in part, an industrial machine or process, the method comprising the steps of:
receiving a plurality of first input signals at a first processor operatively connected to a control board, each first input signal corresponding to a current state of one of the plurality of devices;
executing a stored program to generate a plurality of output signals as a function of the plurality of first input signals, each output signal controlling operation, at least in part, of one of the plurality of devices;
receiving a plurality of second input signals at a second processor operatively connected to the control board, each second input signal corresponding to a hardware function of the control board, wherein the second processor executes independently of the first processor; transmitting a handshaking signal between the first processor and the second processor at a periodic interval;
monitoring the handshaking signal with the first processor;
generating a fault with the first processor when it detects an error in the handshaking signal; and
continuing execution of the first processor for up to a predetermined time when the fault is generated prior to shutting down the first processor.

7. The method of claim 6 further comprising the steps of:
storing a dynamic state table in a first memory during operation of the industrial controller, wherein the dynamic state table includes a plurality of values, each of the values corresponding to a state of the current operation of the industrial machine or process and wherein each of the plurality of values in the dynamic state table is updated when the state changes; and
storing a copy of the dynamic state table in a second memory with the first processor during the predetermined time after the fault is generated.

8. The method of claim 7 wherein the second memory is a portable storage medium removably connected to the control board.

9. The method of claim 7 wherein the second memory is remote from the industrial controller and the step of storing a copy of the dynamic state table includes transmitting the plurality of values to the second memory via a communication interface operatively connected to the first processor and via a network operatively connected between the communication interface and the second memory.

10. The method of any one of claims 6 to 9 further comprising the steps of:
monitoring the plurality of second input signals at the second processor;
generating a second fault with the second processor when it detects an error in the hardware function of the control board; and
initiating a hard shut down of the first processor responsive to generating the second fault.
